# EUROPEAN PATENT APPLICATION

(11) **EP 4 838 208 A1**
(43) Date of publication of application: **11.11.2026**
(21) Application number: 26171090.9
(22) Date of filing: 08.04.2026
(51) Int. Cl.: G01N 21/84, G01N 21/88, B33Y 30/00, G01N 21/892

(54) **TEST SYSTEMS FOR DETERMINING A SURFACE QUALITY OF ROLLERS FOR ADDITIVE MANUFACTURING SYSTEMS AND METHODS OF OPERATING THE SAME**

(30) Priority: 25.04.2025 US 202519189526
(71) Applicant: General Electric Company, Cincinnati, Ohio 45215 (US)
(72) Inventor: STERLE, John, Evendale, Ohio, 45215 (US)
(74) Representative: Hafner & Kohl PartmbB

(57) **Abstract**

A test system (500) for determining a surface quality of a roller (202) for an additive manufacturing system (100) includes a vessel (502) defining a cavity (504) configured to hold a liquid (506) therein and a rotational support (518) coupled to the vessel (502) and defining an axis. The rotational support (518) is configured to position the roller (202) at least partially within the liquid (506). A rotational driver (522) is configured to rotate the roller (202) about the axis. An illumination member (526) emits light toward the vessel (502) for illuminating the liquid (506) therein. An optical sensor (528) faces the cavity (504) to monitor a contrast band (530) formed by dispersion of the light along a boundary between the liquid (506) and the roller (202). The optical sensor (528) produces a signal corresponding to the contrast band (530). An electronic control unit (534) is in communication with the optical sensor (528). The electronic control unit (534) receives the signal and determines a surface quality of the roller (202) from variations in the contrast band (530).

## Description

### TECHNICAL FIELD

The present specification generally relates to test systems for additive manufacturing systems and, more specifically, to test systems for determining a surface quality of rollers for additive manufacturing systems.

### BACKGROUND

Additive manufacturing systems may be utilized to "build" an object from build material, such as organic or inorganic powders, in a layer-wise manner. Conventional additive manufacturing systems include various "recoat" apparatuses that are configured to sequentially distribute layers of build material, such that a binder material can be deposited and cured to "build" an object. The "recoat" apparatuses may use a recoat roller mechanism to flow, spread, and compact each powder layer. As variations in manufacturing of the rollers and powder materials are inevitable, the quantification and understanding of the interaction of the roller with each powder material and the final quality of the printed part is critical. Traditional test systems determine the surface quality of a roller by use of instruments, such as a profilometer, to measure a profile of the surface of the roller. While useful, the measurement of the profile does not fully represent the interaction or results of a given roller during use. Accordingly, a need exists for test systems that determine a surface quality of rollers for additive manufacturing systems.

### BRIEF DESCRIPTION OF THE DRAWINGS

The embodiments set forth in the drawings are illustrative and exemplary in nature and are not intended to limit the subject matter defined by the claims. The following detailed description of the illustrative embodiments can be understood when read in conjunction with the following drawings, where like structure is indicated with like reference numerals and in which:
FIG. 1 schematically depicts a cross-sectional side view of an additive manufacturing system including a build material escapement assembly, according to one or more embodiments shown and described herein;
FIG. 2A schematically depicts a side view of a recoat assembly of the additive manufacturing system of FIG. 1, according to one or more embodiments shown and described herein;
FIG. 2B schematically depicts a side view of an alternate embodiment of the recoat assembly of FIG. 2A, according to one or more embodiments shown and described herein;
FIG. 3 schematically depicts a cross-sectional side view of the additive manufacturing machine of FIG. 1 during a forward recoat of a build material distribution process, according to one or more embodiments shown and described herein;
FIG. 4 schematically depicts a cross-sectional side view of the additive manufacturing assembly of FIG. 1 providing excess build material into the build material escapement assembly, according to one or more embodiments shown and described herein;
FIG. 5 schematically depicts a side elevational view of a test system used to determine a surface quality of a roller of a recoat assembly of the additive manufacturing system of FIG. 1, according to one or more embodiments shown and described herein;
FIG. 6 schematically depicts a top plan view of the test system of FIG. 5, according to one or more embodiments shown and described herein;
FIG. 7 schematically depicts a perspective view of the test system of FIG. 5, according to one or more embodiments shown and described herein;
FIG. 8 schematically depicts a perspective view of the test system of FIG. 5 during operation, according to one or more embodiments shown and described herein; and
FIG. 9 is a flowchart of a method of operating the test system of FIG. 5, according to one or more embodiments shown and described herein.

### DETAILED DESCRIPTION

Embodiments described herein are directed to test systems for determining a surface quality of a roller for an additive manufacturing system. Test systems may include a vessel defining a cavity configured to hold a liquid therein and a rotational support coupled to the vessel and defining an axis. The rotational support may be configured to position the roller at least partially within the liquid while retaining movement of the roller longitudinally along the axis and allowing rotation of the roller about the axis. Test systems may include a rotational driver configured to rotate the roller about the axis, an illumination member that emits light toward the vessel for illuminating the liquid therein, and an optical sensor facing the cavity to monitor a contrast band formed by dispersion of the light along a boundary between the liquid and the roller. The optical sensor may produce a signal corresponding to the contrast band. Test systems may include an electronic control unit in communication with the optical sensor. The electronic control unit may receive the signal and determine a surface quality of the roller from variations in the contrast band.

Previous test systems determine a surface quality of the roller by use of instruments, such as a profilometer, to measure a profile of the surface of the roller. While useful, the measurement of the profile does not fully represent the interaction or results of a given roller during use. Said differently, variations in the surface of the roller may not necessarily result in improper compaction and flow of the powder layer. Furthermore, instruments such as profilometers can be cost prohibitive. The embodiments described herein overcome these limitations by utilizing the rotation of the roller within the liquid of the vessel, which better mimics the flow of powder to determine whether the roller has an acceptable surface quality. Furthermore, the analysis of the contrast band is a cost-effective method of determining the surface quality of the roller. Various embodiments of the test system and the operation of the test system are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

The term "coupled" as used herein may refer to a direct engagement between components as well an indirect engagement through one or more intermediate components.

As used herein, the singular forms "a," "an" and "the" include plural referents unless the context clearly dictates otherwise. Thus, for example, reference to "a" component includes aspects having two or more such components, unless the context clearly indicates otherwise.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

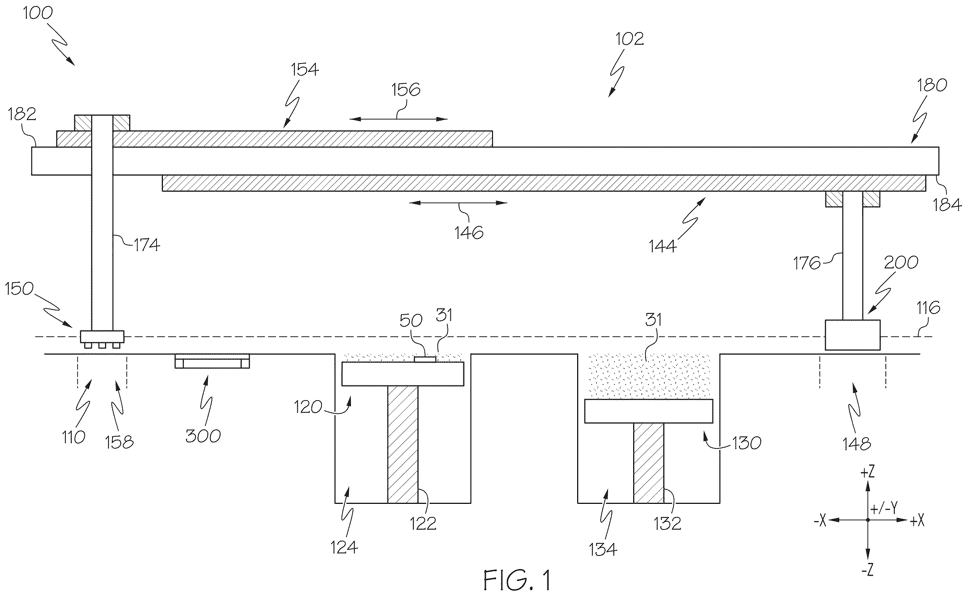

Referring now to FIG. 1, an embodiment of an additive manufacturing system 100 is schematically depicted. The additive manufacturing system 100 includes a cleaning station 110, a build area 124 for receiving build material 31, a supply platform 130 for supplying the build material 31 to the additive manufacturing system 100, an actuator assembly 102, and a build material escapement assembly 300. The actuator assembly 102 includes, among other elements, a recoat assembly 200 for distributing the build material 31 and a print head 150 for depositing binder material 50. The actuator assembly 102 is constructed to facilitate traversing the recoat assembly 200 and the print head 150 over a working axis 116 of the additive manufacturing system 100 independent of one another. This allows for at least some steps of the additive manufacturing process to be performed simultaneously thereby reducing the overall cycle time of the additive manufacturing process to less than the sum of the cycle time for each individual step. In some embodiments of the additive manufacturing system 100 described herein, the working axis 116 of the additive manufacturing system 100 is parallel to the +/- X axis of the coordinate axes depicted in the figures. It should be understood that the components of the additive manufacturing system 100 traversing the working axis 116, such as the print head 150, the recoat assembly 200, and the like, need not be centered on the working axis 116.

In some embodiments described herein, the cleaning station 110, the build area 124, the supply platform 130, and the build material escapement assembly 300 are positioned in series along the working axis 116 of the additive manufacturing system 100 between a print home position 158 of the print head 150 located proximate an end of the working axis 116 in the - X direction, and a recoat home position 148 of the recoat assembly 200 located proximate an end of the working axis 116 in the + X direction. That is, the print home position 158 and the recoat home position 148 are spaced apart from one another in a horizontal direction that is parallel to the +/X axis of the coordinate axes depicted in the figures and the cleaning station 110, the build area 124, the supply platform 130, and the build material escapement assembly 300 are positioned therebetween. In some embodiments described herein, the build area 124 is positioned between the build material escapement assembly 300 and the supply platform 130 along the working axis 116 of the additive manufacturing system 100.

The cleaning station 110 is positioned proximate one end of the working axis 116 of the additive manufacturing system 100 and is co-located with the print home position 158 where the print head 150 is located or "parked" before and after depositing binder material 50 on a layer of build material 31 positioned on the build area 124. The cleaning station 110 may include one or more cleaning sections (not shown) to facilitate cleaning the print head 150 between depositing operations. The cleaning sections may include, for example and without limitation, a soaking station containing a cleaning solution for dissolving excess binder material 50 on the print head 150, a wiping station for removing excess binder material 50 from the print head 150, a jetting station for purging binder material 50 and cleaning solution from the print head 150, a park station for maintaining moisture in the nozzles of the print head 150, or various combinations thereof. The print head 150 may be transitioned between the cleaning sections by the actuator assembly 102.

While reference is made herein to additive manufacturing systems including a print head 150 that dispenses a binder material 50, it should be understood that recoat assemblies 200 described herein may be utilized with other suitable additive powder-based additive manufacturing systems. For example, in some embodiments, instead of building objects with a cured binder material 50 applied to build material 31, in some embodiments, a laser or other energy source may be applied to the build material 31 to fuse the build material 31.

In the embodiment depicted in FIG. 1, the build area 124 includes a receptacle including a build platform 120. The build platform 120 is coupled to a build platform actuator 122 to facilitate raising and lowering the build platform 120 relative to the working axis 116 of the additive manufacturing system 100 in a vertical direction (i.e., a direction parallel to the +/- Z axis of the coordinate axes depicted in the figures). The build platform actuator 122 may be, for example and without limitation, a mechanical actuator, an electro-mechanical actuator, a pneumatic actuator, a hydraulic actuator, or any other actuator suitable for imparting linear motion to the build platform 120 in a vertical direction. Suitable actuators may include, without limitation, a worm drive actuator, a ball screw actuator, a pneumatic piston, a hydraulic piston, an electro-mechanical linear actuator, or the like. The build platform 120 and build platform actuator 122 are positioned in the build area 124 located below the working axis 116 (i.e., in the - Z direction of the coordinate axes depicted in the figures) of the additive manufacturing system 100. During operation of the additive manufacturing system 100, the build platform 120 is retracted into the build area 124 by action of the build platform actuator 122 after each layer of binder material 50 is deposited on the build material 31 located on build platform 120. While the build area 124 described and depicted herein includes a receptacle, it should be understood that the build area 124 may include any suitable structure for supporting build material 31, and may for example include a mere surface supporting the build material 31.

The supply platform 130 is coupled to a supply platform actuator 132 to facilitate raising and lowering the supply platform 130 relative to the working axis 116 of the additive manufacturing system 100 in a vertical direction (i.e., a direction parallel to the +/- Z axis of the coordinate axes depicted in the figures). The supply platform actuator 132 may be, for example and without limitation, a mechanical actuator, an electro-mechanical actuator, a pneumatic actuator, a hydraulic actuator, or any other actuator suitable for imparting linear motion to the supply platform 130 in the vertical direction. Suitable actuators may include, without limitation, a worm drive actuator, a ball screw actuator, a pneumatic piston, a hydraulic piston, an electro-mechanical linear actuator, or the like. The supply platform 130 and supply platform actuator 132 are positioned in a supply receptacle 134 located below the working axis 116 (i.e., in the - Z direction of the coordinate axes depicted in the figures) of the additive manufacturing system 100. During operation of the additive manufacturing system 100, the supply platform 130 is raised relative to the supply receptacle 134 and towards the working axis 116 of the additive manufacturing system 100 by action of the supply platform actuator 132 after a layer of build material 31 is distributed from the supply platform 130 to the build platform 120.

In embodiments, the actuator assembly 102 generally includes a recoat assembly transverse actuator 144, a print head actuator 154, a first guide 182, and a second guide 184. The recoat assembly transverse actuator 144 is operably coupled to the recoat assembly 200 and is operable to move the recoat assembly 200 relative to the build platform 120 to dispense build material 31 on the build platform 120. The print head actuator 154 is operably coupled to the print head 150 and is operable to move the print head 150 relative to the build platform 120 to dispense the binder material 50 on the build platform 120.

In some embodiments described herein, the first guide 182 and the second guide 184 extend in a horizontal direction (i.e., a direction parallel to the +/- X axis of the coordinate axes depicted in the figures) parallel to the working axis 116 of the additive manufacturing system 100 and are spaced apart from one another in the vertical direction. When the actuator assembly 102 is positioned over the cleaning station 110, the build platform 120, the supply platform 130, and the build material escapement assembly 300, as depicted in FIG. 1, the first guide 182 and the second guide 184 extend in a horizontal direction from at least the cleaning station 110 to beyond the supply platform 130.

In the embodiment of the actuator assembly 102 depicted in FIG. 1, the first guide 182 and the second guide 184 are opposite sides of a rail 180 that extends in a horizontal direction and is oriented such that the first guide 182 is positioned above and spaced apart from the second guide 184. For example, in one embodiment, the rail 180 has an "I" configuration in vertical cross section (i.e., a cross section in the Y-Z plane of the coordinate axes depicted in the figures) with upper and lower flanges of the "I" forming the first guide 182 and the second guide 184, respectively. However, it should be understood that other embodiments are contemplated and possible. For example and without limitation, the first guide 182 and the second guide 184 may be separate structures, such as separate rails, extending in the horizontal direction and spaced apart from one another in the vertical direction. In some embodiments, the first guide 182 and the second guide 184 may be positioned at the same height and spaced apart from one another on opposite sides of the rail 180. In embodiments, the first guide 182 and the second guide 184 are positioned in any suitable configuration, and may be collinear.

In some embodiments described herein, the recoat assembly transverse actuator 144 is coupled to one of the first guide 182 and the second guide 184, and the print head actuator 154 is coupled to the other of the first guide 182 and the second guide 184 such that the recoat assembly transverse actuator 144 and the print head actuator 154 are arranged in a "stacked" configuration. For example, in the embodiment of the actuator assembly 102 depicted in FIG. 1, the recoat assembly transverse actuator 144 is coupled to the second guide 184 and the print head actuator 154 is coupled to the first guide 182. However, it should be understood that, in other embodiments, the recoat assembly transverse actuator 144 may be coupled to the first guide 182 and the print head actuator 154 may be coupled to the second guide 184.

In some embodiments described herein, the recoat assembly transverse actuator 144 is bi-directionally actuatable along a recoat motion axis 146 and the print head actuator 154 is bi-directionally actuatable along a print motion axis 156. That is, the recoat motion axis 146 and the print motion axis 156 define the axes along which the recoat assembly transverse actuator 144 and the print head actuator 154 are actuatable, respectively. The recoat motion axis 146 and the print motion axis 156 extend in a horizontal direction and are parallel with the working axis 116 of the additive manufacturing system 100. In some embodiments described herein, the recoat motion axis 146 and the print motion axis 156 are parallel with one another and spaced apart from one another in the vertical direction due to the stacked configuration of the recoat assembly transverse actuator 144 and the print head actuator 154. In some embodiments, such as the embodiment of the actuator assembly 102 depicted in FIG. 1, the recoat motion axis 146 and the print motion axis 156 are located in the same vertical plane (i.e., a plane parallel to the X-Z plane of the coordinate axes depicted in the figures). However, it should be understood that other embodiments are contemplated and possible, such as embodiments in which the recoat motion axis 146 and the print motion axis 156 are located in different vertical planes.

In some embodiments described herein, the recoat assembly transverse actuator 144 and the print head actuator 154 may be, for example and without limitation, mechanical actuators, electro-mechanical actuators, pneumatic actuators, hydraulic actuators, or any other actuator suitable for providing linear motion. Suitable actuators may include, without limitation, worm drive actuators, ball screw actuators, pneumatic pistons, hydraulic pistons, electro-mechanical linear actuators, or the like.

In embodiments, the recoat assembly transverse actuator 144 and the print head actuator 154 may each be a cohesive sub-system that is affixed to the rail 180. However, it should be understood that other embodiments are contemplated and possible, such as embodiments where the recoat assembly transverse actuator 144 and the print head actuator 154 include multiple components that are individually assembled onto the rail 180 to form the recoat assembly transverse actuator 144 and the print head actuator 154, respectively.

Still referring to FIG. 1, the recoat assembly 200 is coupled to the recoat assembly transverse actuator 144 such that the recoat assembly 200 is positioned below (i.e., in the - Z direction of the coordinate axes depicted in the figures) the first guide 182 and the second guide 184. When the actuator assembly 102 is positioned over the cleaning station 110, the build platform 120, the supply platform 130, and the build material escapement assembly 300, as depicted in FIG. 1, the recoat assembly 200 is situated on the working axis 116 of the additive manufacturing system 100. Thus, bi-directional actuation of the recoat assembly transverse actuator 144 along the recoat motion axis 146 affects bi-directional motion of the recoat assembly 200 on the working axis 116 of the additive manufacturing system 100. In the embodiment of the actuator assembly 102 depicted in FIG. 1, the recoat assembly 200 is coupled to the recoat assembly transverse actuator 144 with a support bracket 176 such that the recoat assembly 200 is positioned on the working axis 116 of the additive manufacturing system 100 while still providing clearance between rail 180 of the actuator assembly 102 and the build platform 120, the supply platform 130, and the build material escapement assembly 300. In some embodiments described herein, the recoat assembly 200 may be fixed in directions orthogonal to the recoat motion axis 146 and the working axis 116 (i.e., fixed along the +/- Z axis and/or fixed along the +/- Y axis).

Similarly, the print head 150 is coupled to the print head actuator 154 such that the print head 150 is positioned below (e.g., in the - Z direction of the coordinate axes depicted in the figures) the first guide 182 and the second guide 184. When the actuator assembly 102 is positioned over the cleaning station 110, the build platform 120, the supply platform 130, and the build material escapement assembly 300, as depicted in FIG. 1, the print head 150 is situated on the working axis 116 of the additive manufacturing system 100. Thus, bi-directional actuation of the print head actuator 154 along the print motion axis 156 affects bi-directional motion of the print head 150 on the working axis 116 of the additive manufacturing system 100. In the embodiment of the actuator assembly 102 depicted in FIG. 1, the print head 150 is coupled to the print head actuator 154 with a support bracket 174 such that the print head 150 is positioned on the working axis 116 of the additive manufacturing system 100 while still providing clearance between rail 180 of the actuator assembly 102 and the build platform 120, the supply platform 130, and the build material escapement assembly 300. In some embodiments described herein, the print head 150 may be fixed in directions orthogonal to the print motion axis 156 and the working axis 116 (i.e., fixed along the +/- Z axis and/or fixed along the +/- Y axis).

While FIG. 1 schematically depicts an embodiment of an actuator assembly 102 which includes a first guide 182 and a second guide 184 with the recoat assembly transverse actuator 144 and the print head actuator 154 mounted thereto, respectively, it should be understood that other embodiments are contemplated and possible, such as embodiments which include more than two guides and more than two actuators. It should also be understood that other embodiments are contemplated and possible, such as embodiments which include the print head 150 and the recoat assembly 200 on the same actuator.

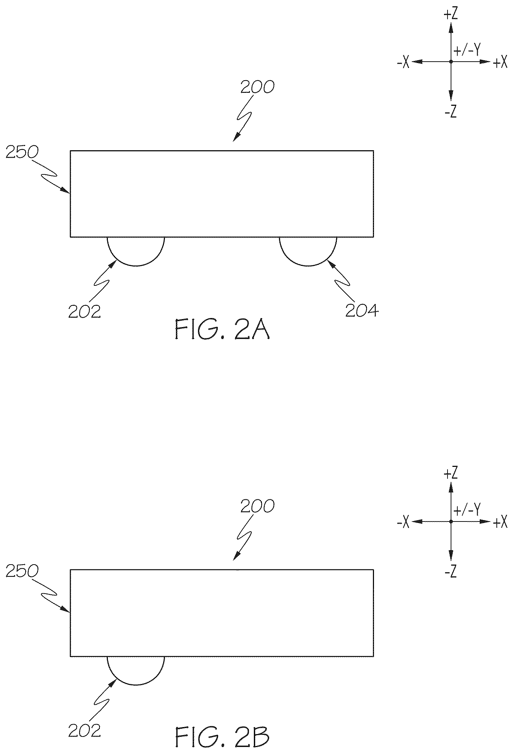

Referring now to FIGS. 2A and 2B, in some embodiments, the recoat assembly 200 includes a base member 250 coupled to the recoat assembly transverse actuator 144 (FIG. 1), which moves the base member 250 in a first lateral direction (i.e., in the -X direction) and a second lateral direction (i.e., the +X direction) opposite the first lateral direction. As referred to herein, the base member 250 may include any suitable structure of the recoat assembly 200 coupled to the recoat assembly transverse actuator 144, and may include a housing, a plate, or the like.

The recoat assembly 200 includes a build material spreading member (such as a powder spreading member) coupled to the base member 250. In embodiments, the powder spreading member includes rollers 202, 204. In embodiments, the second roller 204 is positioned rearward of the first roller 202 (i.e., in the - X direction as depicted). In these embodiments, the first roller 202 may generally be referred to as the "front" roller, and the second roller 204 may be referred to as the "rear" roller. Furthermore, it should be understood that although FIG. 2A depicts the recoat base member 250 as including first roller 202 and second roller 204, the recoat assembly 200 may include only a single roller 202 without departing from the scope of the present disclosure, as is illustrated in FIG. 2B.

Although not shown, it should be appreciated that, in some embodiments, the recoat assembly 200 further includes a first rotational actuator coupled to the first roller 202, and a second rotational actuator coupled to the second roller 204. In some embodiments, the first rotational actuator and the second rotational actuator are spaced apart from and coupled to the first roller 202 and the second roller 204, respectively, through a belt, a chain, or the like. In some embodiments, the recoat assembly 200 may include a single rotational actuator coupled to both the first roller 202 and the second roller 204. The first rotational actuator is configured to rotate the first roller 202 about a first rotation axis and the second rotational actuator is configured to rotate the second roller 204 about a second rotation axis. The first rotation axis and the second rotation axis are generally parallel to one another and are spaced apart from one another in the +/- X axis. The first roller 202 and the second roller 204 may be rotated in a "rotation direction" (e.g., a clockwise direction from the perspective shown in FIG. 2A) and/or a "counter-rotation direction" that is the opposite of the rotation direction (e.g., a counter-clockwise direction from the perspective shown in FIG. 2A). The first roller 202 and the second roller 204 can be rotated in the same direction or may be rotated in opposite directions from one another. The first rotational actuator and the second rotational actuator may include any suitable actuator for inducing rotation of the first roller 202 and the second roller 204, such as and without limitation, alternating current (AC) or direct current (DC) brushless motors, linear motors, servo motors, stepper motors, pneumatic actuators, hydraulic actuators, or the like.

In these embodiments, the rollers 202, 204 may be rotatably fixed within the recoat base member 250, such that the rollers 202, 204 may move in tandem with the recoat base member 250 as the recoat base member 250 is actuated. As such, the rollers 202, 204 may rotate in the rotation and counter-rotation direction, as has been described herein, and may translate with the recoat base member 250, but may not move in any orthogonal direction (e.g., in the +/- Y or +/- Z direction, as depicted in the coordinate axis of FIGS. 2A and 2B).

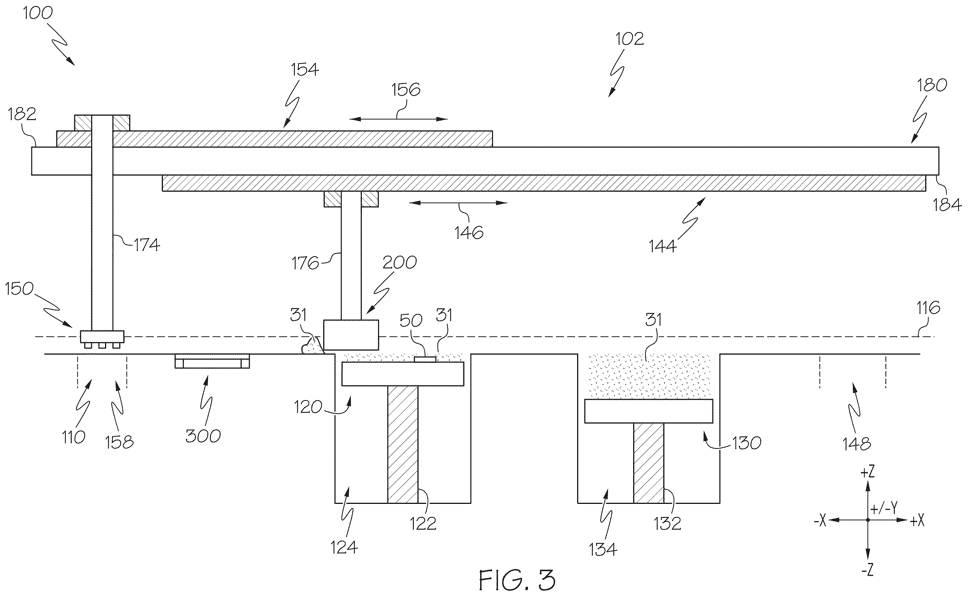

In operation, the recoat assembly 200 may move across the build area 124 in the - X direction, as depicted in FIG. 3, to perform a forward recoat (e.g., a recoat that distributes build material 31 from the supply platform 130 to the build area 124). In these embodiments, the first roller 202 and the second roller 204 may rotate in the counter-rotation direction, such that build material 31 is distributed from the supply platform 130 and onto the build platform 120 as the recoat assembly 200 performs the forward recoat.

As further depicted in FIG. 3, the movement of the recoat assembly 200 across the build area 124 during the forward recoat may cause excess build material 31 to collect outside the area of the build platform 120. As has been discussed herein, the collection of excess build material 31 may result in an uneven distribution of the build material 31 on the build platform 120, which may cause irregularities in the objects formed during an additive manufacturing process and inefficiencies in the process of forming the objects.

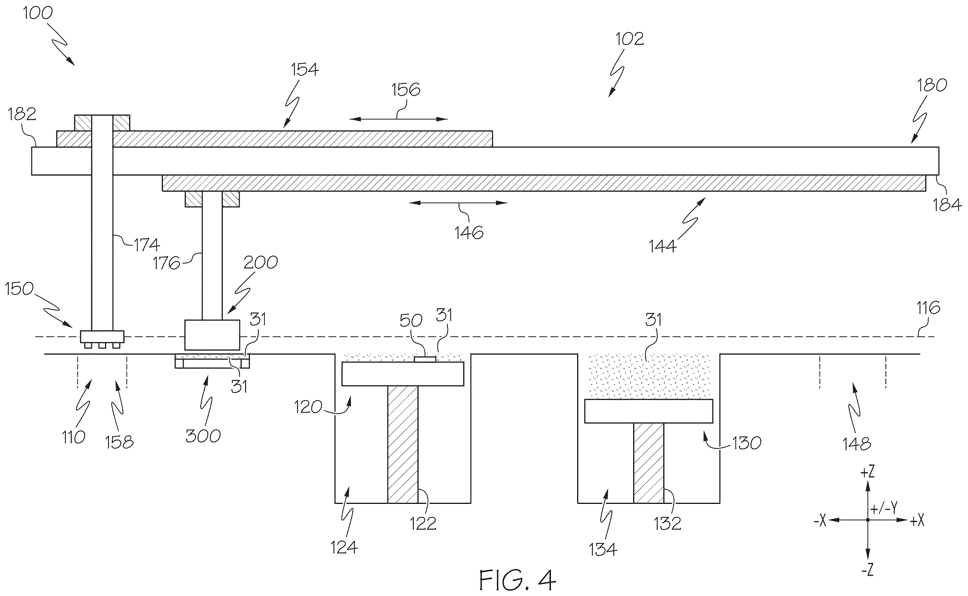

In order to evenly distribute the collection of excess build material 31, the recoat assembly 200 may continue to move in the - X direction such that the recoat assembly 200 forces the build material 31 into the build material escapement assembly 300, as is depicted in FIG. 4. In these embodiments, the build material escapement assembly 300 may receive the excess build material 31 in a cavity when the recoat assembly 200 performs the forward recoat. When the recoat assembly 200 prepares to perform a return recoat (e.g., moving the recoat assembly 200 in the - X direction as depicted in the coordinate axis of FIG. 3 towards the recoat home position 148) the build material escapement assembly 300 may be actuated to present the excess build material 31 to the recoat assembly 200, such that the recoat assembly 200 may distribute the excess build material 31 across the build platform 120 during the return recoat.

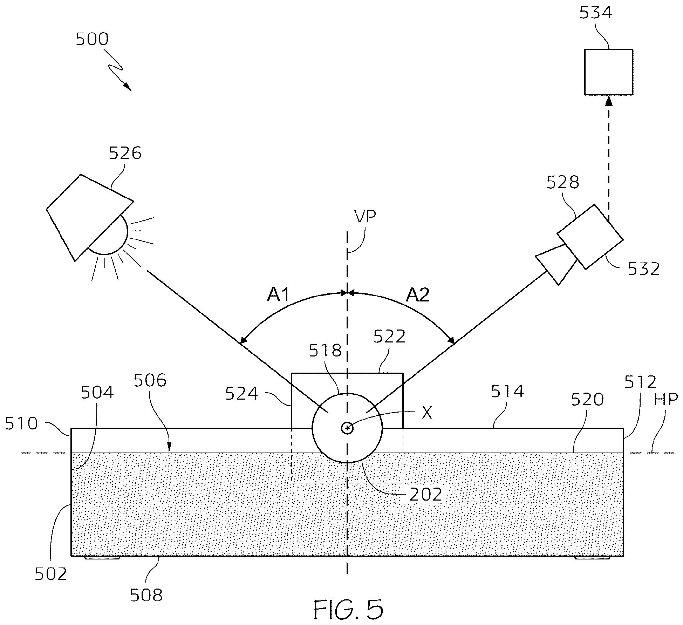

FIGS. 5-8 show an embodiment of a test system 500. The test system 500 is used to determine a surface quality of the rollers 202, 204 of the additive manufacturing system 100 (FIG. 1). Specifically, the rollers 202, 204 are individually mounted and analyzed by the test system 500 to determine their respective surface quality. As described above, the recoat assembly 200 may move across the build area 124 in the - X direction, as depicted in FIG. 3, to perform the forward recoat that distributes build material 31 from the supply platform 130 to the build area 124. In these embodiments, the first roller 202 and the second roller 204 distribute the build material 31 from the supply platform 130 and onto the build platform 120 as the recoat assembly 200 performs the forward recoat. Said differently, the first roller 202 and the second roller 204 flow, spread, and compact the build material 31. Variation in manufacturing of the rollers 202, 204 can result in variations in the flow, spread, and compaction of the build material 31 which can lead to reduced quality of the final component. and powder materials is inevitable, the quantification and understanding of the interaction of the rollers 202, 204 with each powder material and the final quality of the printed part is critical. Determining the surface quality of the rollers 202, 204 (e.g., variations in the circular cross-sectional profile longitudinally along the rollers 202, 204) may serve to provide precise and accurate flow, spread, and compaction of the build material 31. Only one of the rollers 202, 204 is shown in FIGS. 5-8 and described below in use with the test system 500 (specifically, the first roller 202). However, the second roller 204 or other like component may be utilized with the test system 500.

The test system 500, as shown in FIGS. 5-8, is spaced and separate from the additive manufacturing system 100 (FIG. 1). However, the test system 500 may be mounted to and incorporated into the additive manufacturing system 100. For example, the test system 500 may be mounted to an end of the additive manufacturing system 100 (e.g., near the build material escapement assembly 300 or the recoat home position 148 of the recoat assembly 200), which would allow a technician to remove a roller 202 from additive manufacturing system 100, test the surface quality of the roller 202, and reinstall the roller 202 without having to move the roller 202 to another portion of the facility.

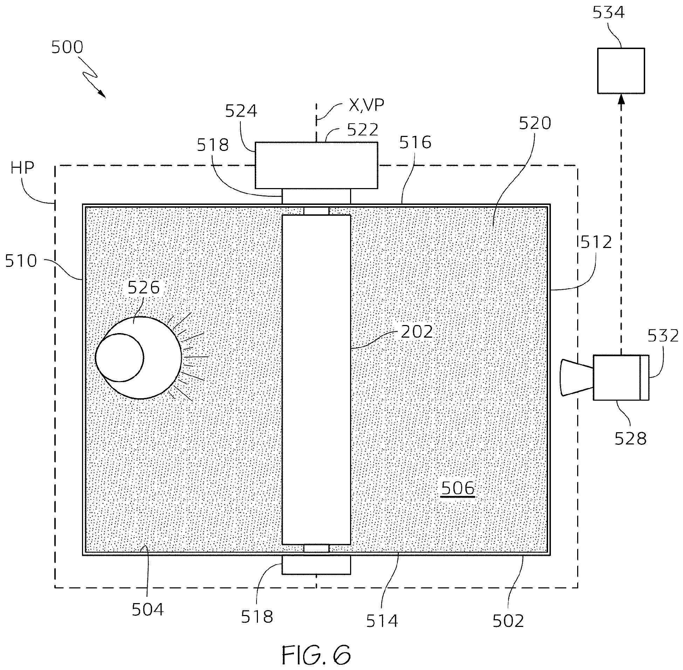

Referring now to FIG. 5, the test system 500 includes a vessel 502 defining a cavity 504 configured to hold a liquid 506 therein. As shown in FIG. 5, the vessel 502 includes a bottom wall 508 extending in the longitudinal direction and the lateral direction and defining a bottom of the cavity 504. As shown in FIG. 6, the vessel 502 further includes a first side wall 510, a second side wall 512, a third side wall 514, and a fourth side wall 516 extending upwardly in the vertical direction from a perimeter of the bottom wall 508. The first side wall 510 and the second side wall 512 are spaced from one another in the longitudinal direction. The third side wall 514 and fourth side wall 516 are spaced from one another in the lateral direction. The third side wall 514 and the fourth side wall 516 extend between opposite ends of the first side wall 510 and the second side wall 512. As such, the vessel 502 is configured as a rectangular prism. However, the vessel 502 may have any suitable configuration for defining the cavity 504 and the holding the liquid 506 therein (e.g., a single wall having a circular or elliptical shape).

The liquid 506 includes water or any other suitable fluid. The liquid 506 may further include a coloring agent dispersed therein. The coloring agent provides contrast to the water when light is dispersed through the water. In one embodiment, the coloring agent provides a red tint to the water. However, the coloring agent may be any suitable color that provides contrast to the water or fluid. It is to be appreciated that the liquid 506 may include any suitable fluid (e.g., oil, alcohol, etc.) that is at least partially transparent to allow light to transmit therethrough.

With reference to FIGS. 6, the test system 500 includes a pair of rotational supports 518 coupled to the vessel 502 and defining an axis X. The pair of rotational supports 518 are configured to position the roller 202 at least partially within the liquid 506 while retaining movement of the roller 202 longitudinally along the axis X and allowing rotation of the roller 202 about the axis X. More specifically, the roller 202 extends between a pair of ends. The pair of ends are individually coupled to the pair of rotational supports 518. In other embodiments, the test system 500 may include a single rotational support 518 with the roller 202 cantilevered by the single rotational support 518. It is to be appreciated that in other embodiments the test system 500 may include more than two rotational supports 518. For example, an additional rotational support 518 may be disposed within the cavity 504 and mounted to the bottom wall 508. The additional rotational support 518 would extend upward and from the bottom wall 508 and would support a center section of the roller 202.

In the embodiment shown in FIGS. 6, the axis X extends across the cavity 504 in the lateral direction and the pair of rotational supports 518 are mounted to the third side wall 514 and the fourth side wall 516 of the vessel 502. The axis X may extend in any suitable direction across the cavity 504 and the pair of rotational supports 518 may be mounted to any suitable portion of the vessel 502. Moreover, the pair of rotational supports 518 may be coupled to the vessel 502 through an intermediate component. In yet another embodiment, the pair of rotational supports 518 may be mounted to component that is separate from the vessel 502. The pair of rotational supports 518 may include a bearing, a bushing, or any other suitable component that constrains relative motion to only the desired motion and reduces friction between moving parts. In other embodiments, the pair of rotational supports 518 may be holes extending through the vessel 502 that receive the pair of ends of the roller 202 therein.

With reference FIGS. 5-8, the vessel 502 defines a horizontal plane HP extending through the cavity 504 and corresponding to an upper surface 520 of the liquid 506. Said differently, the horizontal plane HP may correspond to a fill level of the liquid 506 within the cavity 504. The axis X (along which the roller 202 extends) may be parallel to the horizontal plane HP. Moreover, the horizontal plane HP may be spaced from the axis X in the vertical direction. More specifically, the axis X may be disposed above the horizontal plane HP in the vertical direction. Therefore, the roller 202 may be partially disposed within the liquid 506. The portion of the roller 202 that is disposed within the liquid 506 depends on the relationship between the positioning of the horizontal plane HP relative to the axis X (i.e., a distance in the vertical direction between the horizontal plane HP and the axis X) and a cross-sectional radius of the roller 202. More specifically, if the distance between the horizontal plane HP and the axis X is greater than the cross-sectional radius of the roller 202, the roller 202 will be disposed above the liquid 506. If the distance between the horizontal plane HP and the axis X is less than or equal to the cross-sectional radius of the roller 202, the roller 202 will be disposed at least partially within the liquid 506. The positioning of the roller 202 at least partially within the liquid 506 allows for the determination of the surface quality of the roller 202. Therefore, the horizontal plane HP may be adjusted in the vertical direction by adjusting a volume of the liquid 506 within the cavity 504 in order to ensure that the distance between the horizontal plane HP and the axis X is less than or equal to the cross-sectional radius of the roller 202.

The test system 500 includes a rotational driver 522 configured to rotate the roller 202 about the axis X. In some embodiments, the rotational driver 522 is adjacent one of the pair of rotational supports 518. In the embodiment shown in FIGS. 5-8, the rotational driver 522 is adjacent the rotational support 518 disposed on the fourth side wall 516 of the vessel 502 and is aligned with the axis X. The rotational driver 522 provides a rotational force about the axis X. The rotational driver 522 is coupled to roller 202. Therefore, rotation of the rotational driver 522 about the axis X drives rotation of the roller 202 about the axis X. It is to be appreciated that the rotational driver 522 may be positioned in any suitable configuration relative to the roller 202 and the axis X that allows for rotation of the roller 202.

In the embodiment shown in FIGS. 5-8, the rotational driver 522 includes an electric motor 524. In other embodiments, the rotational driver 522 includes a hydraulic motor, pneumatic motor, a manually operated crank, or any other suitable component that may rotate the roller 202 about the axis X.

With reference to FIGS. 5 and 6, the test system 500 includes an illumination member 526 that emits light toward the vessel 502 for illuminating the liquid 506 therein. The light produced by the illumination member 526 may be in the visible spectrum (e.g., light having a wavelength of about 380 nanometers to about 750 nanometers) and/or the non-visible spectrum (e.g., infrared, ultraviolet, etc.). The illumination member 526 may include an incandescent lightbulb, a fluorescent lightbulb, a light emitting diode, or any other component capable of emitting light.

The test system 500 includes an optical sensor 528 facing the cavity 504 to monitor a contrast band 530 formed by dispersion of the light along a boundary between the liquid 506 and the roller 202. The optical sensor 528 produces a signal corresponding to the contrast band 530. In the embodiment shown in FIGS. 5 and 6, the optical sensor 528 includes a camera 532 and the signal produced by the optical sensor 528 is an image of the contrast band 530. However, any suitable optical sensor 528 may be used to monitor the contrast band 530.

In some embodiments, the illumination member 526 and the optical sensor 528 are disposed above the horizontal plane HP in the vertical direction, as shown in FIG. 5. As such, the light emitted by the illumination member 526 enters the liquid 506 from above and transmits through the liquid 506 by refraction, reflection, etc. At least some of the light transmits upwardly in the vertical direction out of the liquid 506 toward the optical sensor 528. A portion of the light that transmits toward the optical sensor 528 through the boundary between the liquid 506 and the roller 202 (i.e., the liquid 506 that is adjacent the roller 202). The contrast band 530 is formed along the boundary by variations in the flow of the liquid 506 along the moving surface of the roller 202 as the roller 202 rotates. More specifically, variations in the roller 202 create drag through the liquid 506, which causes turbulent flow around roller 202 at the boundary layer. The turbulent flow of the liquid 506 distorts and disperses the light passing therethrough, causing a variation in contrast between the light passing through the liquid 506 adjacent the roller 202 and the light passing through the liquid 506 spaced from the roller 202, which is monitored by the optical sensor 528.

With reference to FIGS. 5-8, a vertical plane VP extends in the vertical direction from the axis X. The illumination member 526 and the optical sensor 528 disposed on opposing sides of the vertical plane VP, as shown in FIG. 5. As such, the light is emitted into the liquid 506 on one side of the vertical plane VP and reflects, retracts, etc. through the liquid 506 toward the optical sensor 528 on the other side of the vertical plane VP. The illumination member 526 may be positioned at an input angle A1 measured about the axis X from the vertical plane VP. In one embodiment, the input angle A1 is greater than zero degrees and equal to or less than 75 degrees. In another embodiment, the input angle A1 is at or between 20 degrees and 55 degrees. It is to be appreciated that the illumination member 526 may be positioned at any suitable input angle A1 that allows the light to transmit through the liquid 506 and toward the optical sensor 528. Moreover, the position of the illumination member 526 may be adjusted relative to the vessel 502 to optimize the clarity of the contrast band 530 for monitoring by the optical sensor 528.

The optical sensor 528 may be positioned at an output angle A2 measured about the axis X from the vertical plane VP. In one embodiment, the output angle A2 is at or between 25 degrees and 90 degrees. In another embodiment, the output angle A2 is at or between 45 degrees and 70 degrees. It is to be appreciated that the optical sensor 528 may be positioned at any suitable output angle A2 that allows the optical sensor 528 to receive the light that transmits through the liquid 506 and the contrast band 530. Moreover, the position of the optical sensor 528 may be adjusted relative to the vessel 502 to optimize the clarity of the contrast band 530 that is monitored by the optical sensor 528.

With reference to FIGS. 5 and 6, the test system 500 includes an electronic control unit 534 in communication with the optical sensor 528. The electronic control unit 534 may include a processor and a memory unit coupled to the processor. The processor may include processing components operable to receive and execute instructions from the memory unit. The memory unit may store detection logic and control logic. The detection logic and the control logic may each include a plurality of different pieces of logic, each of which may be embodied as a computer program, firmware, and/or software/hardware. In some embodiments, the memory unit is configured as volatile and/or nonvolatile memory and as such may include random access memory (SRAM, DRAM, and/or other types of RAM), flash memory, secure digital (SD) memory, registers, compact discs, digital versatile discs (DVD), and/or other types of nontransitory computer readable mediums. Depending on the particular embodiments, these nontransitory computer readable mediums may reside within the electronic control unit 534 and/or external to the electronic control unit 534.

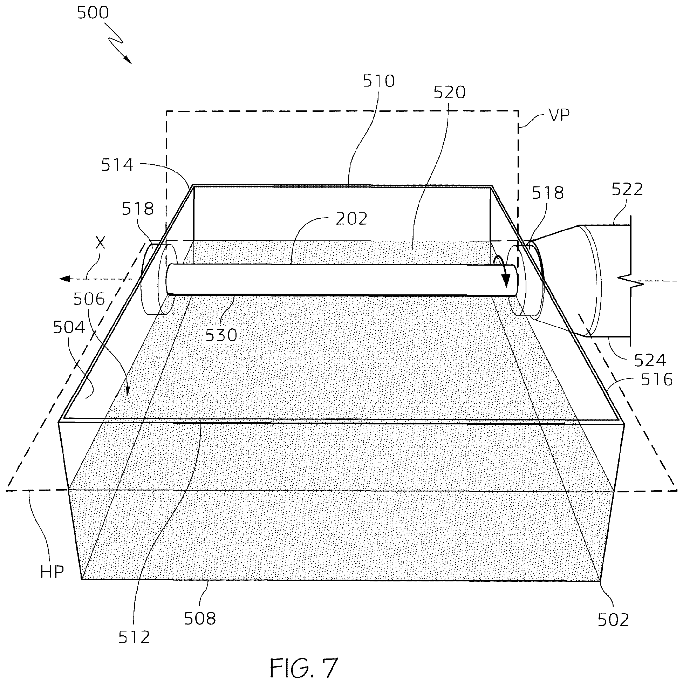

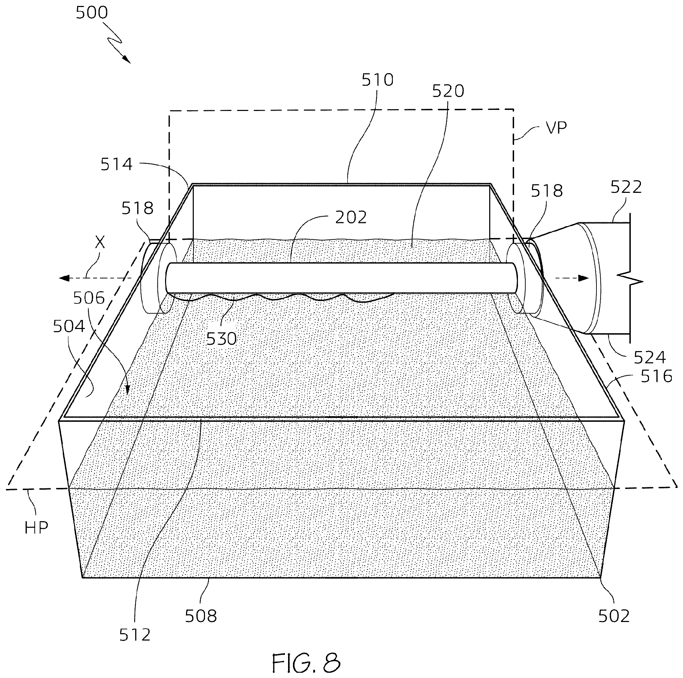

The electronic control unit 534 receives the signal and determines a surface quality of the roller 202 from variations in the contrast band 530. For example, the processor of the electronic control unit 534 may analyze the contrast band 530 and assess widths to the contrast band 530 at numerous locations along the axis X. The widths could be an infinite number of widths taken at an infinite number of locations along the axis X. For any number of widths, the widths collectively provide detail as to variations in the contrast band 530 along the roller 202. For comparison, FIG. 7 shows the roller 202 being stationary with an even contrast band 530 while FIG. 8 shows the roller 202 rotating about the axis X and producing the contrast band 530 with varying widths along a left side of the roller 202, with the contrast band 530 having a straight configuration along the right side of the roller 202. This is indicative of the roller 202 having a higher surface quality on the right side of the roller 202 than the left side of the roller 202. The processor may then compare the widths to a preset standard(s) saved in the memory unit or to an average width determined from the widths, and determine a deviation for each of the widths. If deviation for a width is over a threshold corresponding to the preset standard(s) saved in the memory unit, average width, etc., then the process may determine a portion of the surface of the roller 202 having poor surface quality. The processor may then log in the memory unit the locations of the portions(s) of the surface of the roller 202 that have poor surface quality for remedial action (e.g., surface turning, sanding, polishing, etc.) to correct the poor surface quality. It is to be appreciated that the electronic control unit 534 may determine the surface quality of the roller 202 from variations in the contrast band 530 by any suitable method, including, but not limited to, image/pattern recognition. Moreover, in other embodiments the electronic control unit 534 may be configured to register a rotational position of the roller 202 based on the determination of a surface defect in order to identify the location of the defect along the roller 202. In other embodiments, the speed of rotation of the roller 202 may be tracked and measured by the electronic control unit 534 in conjunction with the monitoring of the contrast band 530 in order to identify the location of the defect along the roller 202.

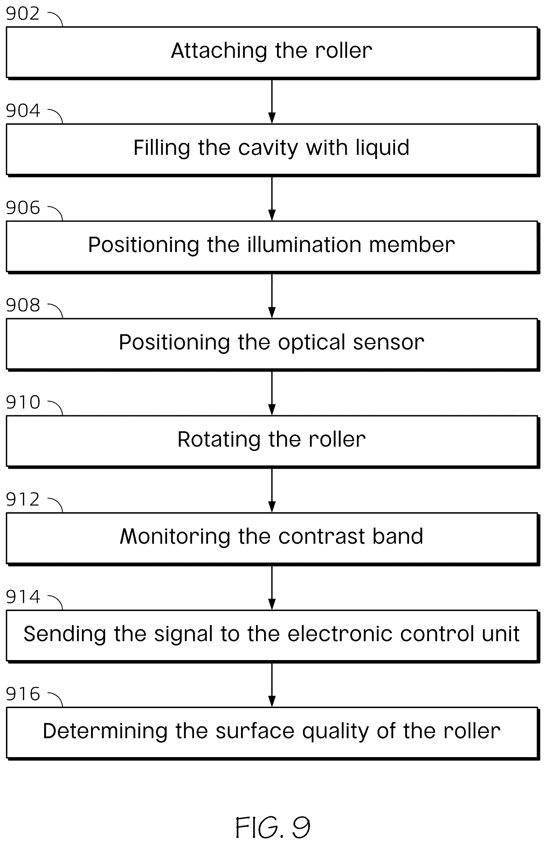

Methods for operating the test system 500 to determine the surface quality of the roller 202 will now be described with reference to the appended drawings. Referring to the flowchart shown in FIG. 9, and with reference to FIGS. 5-8, an example method of operating the test system 500 is depicted. Step 902 includes attaching the roller 202 to the pair of rotational supports 518 disposed along the axis X. The roller 202 may be slid into each of the rotational supports 518, with the rotational supports 518 sized and configured to retain the roller 202 therein. Step 904 includes filling the cavity 504 of the vessel 502 with the liquid 506 until the roller 202 is at least partially disposed within the liquid 506. More specifically, the liquid 506 fills the cavity 504 to the horizontal plane HP (FIG. 5). The location of the horizontal plane HP may vary in the vertical direction depending on the size of the roller 202.

Step 906 includes positioning the illumination member 526 above the liquid 506 to emit the light towards the liquid 506 (FIG. 5). The positioning of the illumination member 526 in step 906 may include positioning the illumination member 526 at the input angle A1 measured about the axis X from the vertical plane VP. Moreover, the input angle A1 may be greater than zero degrees and equal to or less than 75 degrees. The positioning of the illumination member 526 in step 906 may include emitting the light into the liquid 506, allowing for adjustment of the illumination member 526 to optimize the light emitted into the fluid for producing the contrast band 530.

Step 908 includes positioning the optical sensor 528 above the liquid 506 (FIG. 5). The positioning of the optical sensor 528 in step 908 may include positioning the optical sensor 528 at the output angle A2 measured about the axis X from the vertical plane VP. The output angle A2 may be at or between 25 degrees and 90 degrees. The output angle A2 may be adjusted to optimize the light received by the optical sensor 528. It is to be appreciated that the steps of filling the cavity 504 of the vessel 502 with the liquid 506 until the roller 202 is at least partially disposed within the liquid 506 (step 904), positioning the illumination member 526 above the liquid 506 to emit the light towards the liquid 506 (step 906), and/or positioning the optical sensor 528 above the liquid 506 (step 908) may be performed autonomously through the use or sensors, actuators, etc., including similar components already described herein (e.g., the optical sensor 528).

Step 910 includes rotating the roller 202 partially disposed within the liquid 506 about the axis X with the rotational driver 522. The contrast band 530 is correspondingly formed along the boundary by variations in the flow of the liquid 506 along the moving surface of the roller 202 as the roller 202 rotates. The variations in the roller 202 create drag through the liquid 506, which causes turbulent flow around the roller 202 at the boundary layer, which distorts and disperses the light passing therethrough, causing a variation in contrast between the light passing through the liquid 506 adjacent the roller 202 and the light passing through the liquid 506 spaced from the roller 202.

Step 912 includes monitoring the contrast band 530 formed by dispersion of light along the boundary between the liquid 506 and the roller 202 with the optical sensor 528. Monitoring the contrast band 530 in step 912 may include receiving the light from the contrast band 530. Step 914 includes sending the signal comprising the contrast band 530 from the optical sensor 528 to the electronic control unit 534. Step 916 includes determining the surface quality of the roller 202 from the contrast band 530 in the signal. Determining the surface quality at step 916 may include the processor of the electronic control unit 534 analyzing the contrast band 530 and assessing widths to the contrast band 530 at numerous locations along the axis X, which may then be compared to a preset standard(s) saved in the memory unit or to an average width determined from the widths, and determination a deviation for each of the widths. Determining the surface quality at step 916 may include determining if deviation for a width is over the threshold (described above) and then determining a portion of the surface of the roller 202 having poor surface quality. Determining the surface quality at step 916 may include the processor logging in the memory unit the locations of the portion(s) of the surface of the roller 202 that have poor surface quality for remedial action to correct the poor surface quality (e.g., surface turning, sanding, polishing, etc.). Determining the surface quality at step 916 may include determining the surface quality of the roller 202 from variations in the contrast band 530 by image/pattern recognition.

If the roller 202 is determined to have poor surface quality, the roller may be removed and remedial action performed. The roller 202 may then be subsequently repositioned in the test system 500 to confirm the defects have been addressed. Once the proper characteristics are achieved, the roller 202 can then be utilized in the recoat assembly 200 described herein.

From the above, it is to be appreciated that defined herein are test systems for determining a surface quality of a roller for an additive manufacturing system. Test systems may include a vessel defining a cavity configured to hold a liquid therein and a rotational support coupled to the vessel and defining an axis. The rotational support may be configured to position the roller at least partially within the liquid while retaining movement of the roller longitudinally along the axis and allow rotation of the roller about the axis. Test systems may include a rotational driver configured to rotate the roller about the axis, an illumination member that emits light toward the vessel for illuminating the liquid therein, and an optical sensor facing the cavity to monitor a contrast band formed by dispersion of the light along a boundary between the liquid and the roller. The optical sensor may produce a signal corresponding to the contrast band. Test systems may include an electronic control unit in communication with the optical sensor. The electronic control unit may receive the signal and determine a surface quality of the roller from variations in the contrast band.

The embodiments described herein utilize the rotation of the roller within the liquid of the vessel, which better mimics the flow of build material to determine whether the roller has an acceptable surface quality. Furthermore, the analysis of the contrast band is a cost-effective method of determining the surface quality of the roller.

Further aspects of the embodiments described herein are provided by the subject matter of the following clauses:

A test system for determining a surface quality of a roller for an additive manufacturing system, the test system comprising: a vessel defining a cavity configured to hold a liquid therein; a rotational support defining an axis, the rotational support configured to position a roller at least partially within the liquid while allowing rotation of the roller about the axis; a rotational driver configured to rotate the roller about the axis; an illumination member that emits light toward the vessel for illuminating the liquid therein; an optical sensor facing the cavity to monitor a contrast band formed by dispersion of the light along a boundary between the liquid and the roller and produce a signal corresponding to the contrast band; and an electronic control unit in communication with the optical sensor to receive the signal and determine a surface quality of the roller from variations in the contrast band.

The test system of any preceding clause, wherein the illumination member and the optical sensor are disposed above a horizontal plane, corresponding to an upper surface of the liquid, in the vertical direction.

The test system of any preceding clause, wherein the illumination member and the optical sensor are disposed on opposing sides of a vertical plane extending vertically from the axis of the roller.

The test system of any preceding clause, wherein the illumination member is positioned at an input angle measured about the axis from the vertical plane, the input angle being greater than zero degrees and equal to or less than 75 degrees.

The test system of any preceding clause, wherein the optical sensor is positioned at an output angle measured about the axis from the vertical plane, the output angle being at or between 25 degrees and 90 degrees.

The test system of any preceding clause, wherein the light produced by the illumination member is in the visible spectrum.

The test system of any preceding clause, wherein the optical sensor comprises a camera and the signal produced by the optical sensor is an image of the contrast band.

The test system of any preceding clause, wherein the rotational driver comprises an electric motor.

A method of operating a test system to determine a surface quality of a roller for an additive manufacturing system, the method comprising: rotating the roller partially disposed within a liquid about an axis with a rotational driver; monitoring a contrast band formed by dispersion of light along a boundary between the liquid and the roller with an optical sensor; sending a signal comprising the contrast band from the optical sensor to the electronic control unit; and determining the surface quality of the roller from the contrast band in the signal with the electronic control unit.

The method of any preceding clause, further comprising attaching the roller to a rotational support disposed along the axis.

The method of any preceding clause, further comprising filling a cavity of a vessel with the liquid until the roller is at least partially disposed within the liquid.

The method of any preceding clause, further comprising positioning an illumination member above the liquid to emit the light towards the liquid.

The method of any preceding clause, wherein positioning the illumination member includes positioning the illumination member at an input angle measured about the axis from a vertical plane.

The method of any preceding clause, wherein the input angle is greater than zero degrees and equal to or less than 75 degrees.

The method of any preceding clause, further comprising positioning the optical sensor above the liquid.

The method of any preceding clause, wherein positioning the optical sensor includes positioning the optical sensor at an output angle measured about the axis from a vertical plane.

The method of any preceding clause, wherein the output angle is at or between 25 degrees and 90 degrees.

A test system for determining a surface quality of a roller for an additive manufacturing system, the test system comprising: a vessel defining a cavity configured to hold a liquid therein, the vessel defining a horizontal plane extending through the cavity and corresponding to an upper surface of the liquid; a rotational support defining an axis parallel to the horizontal plane and spaced from the horizontal plane in a vertical direction, the rotational support configured to position a roller at least partially within the liquid while allowing rotation of the roller about the axis; a rotational driver configured to rotate the roller about the axis; an illumination member that emits light toward the vessel for illuminating the liquid therein, the illumination member disposed above the horizontal plane in the vertical direction; an optical sensor facing the cavity to monitor a contrast band formed by dispersion of the light along a boundary between the liquid and the roller and produce a signal corresponding to the contrast band, the optical sensor disposed above the horizontal plane in the vertical direction; and an electronic control unit in communication with the optical sensor to receive the signal and determine a surface quality of the roller from variations in the contrast band, wherein the illumination member and the optical sensor are disposed on opposing sides of a vertical plane extending from the axis in the vertical direction.

The test system of any preceding clause, wherein the illumination member is positioned at an input angle measured about the axis from the vertical plane, the input angle being greater than zero degrees and equal to or less than 75 degrees.

The test system of any preceding clause, wherein the optical sensor is positioned at an output angle measured about the axis from the vertical plane, the output angle being at or between 25 degrees and 90 degrees.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A test system (500) for determining a surface quality of a roller (202) for an additive manufacturing system (100), the test system (500) comprising:
a vessel (502) defining a cavity (504) configured to hold a liquid (506) therein;
a rotational support (518) defining an axis, the rotational support (518) configured to position the roller (202) at least partially within the liquid (506) while allowing rotation of the roller (202) about the axis;
a rotational driver (522) configured to rotate the roller (202) about the axis;
an illumination member (526) that emits light toward the vessel (502) for illuminating the liquid (506) therein;
an optical sensor (528) facing the cavity (504) to monitor a contrast band (530) formed by dispersion of the light along a boundary between the liquid (506) and the roller (202) and produce a signal corresponding to the contrast band (530); and
an electronic control unit (534) in communication with the optical sensor (528) to receive the signal and determine a surface quality of the roller (202) from variations in the contrast band (530).

2. The test system (500) of claim 1, wherein the illumination member (526) and the optical sensor (528) are disposed above a horizontal plane, corresponding to an upper surface (520) of the liquid (506), in the vertical direction.

3. The test system (500) of any one of claims 1 or 2, wherein the illumination member (526) and the optical sensor (528) are disposed on opposing sides of a vertical plane extending vertically from the axis of the roller (202).

4. The test system (500) of claim 3, wherein the illumination member (526) is positioned at an input angle measured about the axis from the vertical plane, the input angle being greater than zero degrees and equal to or less than 75 degrees.

5. The test system (500) of any one of claims 3 or 4, wherein the optical sensor (528) is positioned at an output angle measured about the axis from the vertical plane, the output angle being at or between 25 degrees and 90 degrees.

6. The test system (500) of any one of claims 1-5, wherein the light produced by the illumination member (526) is in the visible spectrum.

7. The test system (500) of any one of claims 1-6, wherein the optical sensor (528) comprises a camera (532) and the signal produced by the optical sensor (528) is an image of the contrast band (530).

8. The test system (500) of any one of claims 1-7, wherein the rotational driver (522) comprises an electric motor (524).

9. A method of operating a test system (500) to determine a surface quality of a roller (202) for an additive manufacturing system (100), the method comprising:
rotating the roller (202) partially disposed within a liquid (506) about an axis with a rotational driver (522);
monitoring a contrast band (530) formed by dispersion of light along a boundary between the liquid (506) and the roller (202) with an optical sensor (528);
sending a signal comprising the contrast band (530) from the optical sensor (528) to an electronic control unit (534); and
determining the surface quality of the roller (202) from the contrast band (530) in the signal with the electronic control unit (534).

10. The method of claim 9, further comprising attaching the roller (202) to a rotational support (518) disposed along the axis.

11. The method of any one of claims 9 or 10, further comprising filling a cavity (504) of a vessel (502) with the liquid (506) until the roller (202) is at least partially disposed within the liquid (506).

12. The method of any one of claims 9-11, further comprising positioning an illumination member (526) above the liquid (506) to emit the light towards the liquid (506).

13. The method of claim 12, wherein positioning the illumination member (526) includes positioning the illumination member (526) at an input angle measured about the axis from a vertical plane.

14. The method of claim 13, wherein the input angle is greater than zero degrees and equal to or less than 75 degrees.

15. The method of any one of claims 9-14, further comprising positioning the optical sensor (528) above the liquid (506).
